(19) Europäisches Patentamt
European Patent Office
Office européen des brevets

(11) **EP 1 113 029 A1**

(12) **DEMANDE DE BREVET EUROPEEN**

(43) Date de publication:
**04.07.2001 Bulletin 2001/27**

(21) Numéro de dépôt: **00403632.3**

(22) Date de dépôt: **21.12.2000**

(51) Int Cl.[7]: **C08F 220/56**, C08F 220/58, C08F 220/60, C08F 230/02, C08F 2/32

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **28.12.1999 FR 9916575**

(71) Demandeur: **SOCIETE D'EXPLOITATION DE PRODUITS POUR LES INDUSTRIES CHIMIQUES, S.E.P.P.I.C.**
**75321 Paris Cédex 07 (FR)**

(72) Inventeurs:
- **Candau, Françoise**
  **67000 Strasbourg (FR)**
- **Selb, Joseph**
  **67270 Kienheim (FR)**
- **Mallo, Paul**
  **78400 Chatou (FR)**
- **Braun, Olivier**
  **67000 Strasbourg (FR)**

(74) Mandataire: **Conan, Philippe Claude et al**
**L'Air Liquide**
**D.S.P.I.**
**75, quai d'Orsay**
**75321 Paris Cedex 07 (FR)**

(54) **Nouveaux polymères, le procédé pour leur préparation et les microlatex inverses les contenant**

(57) Polymère linéaire, branché ou réticulé, susceptible d'être obtenu par polymérisation du N-alkyl acrylamide, dans lequel le radical alkyle est linéaire ou ramifié et comporte de 1 à 6 atomes de carbone, avec un ou plusieurs monomères choisis parmi les monomères cationiques, les monomères comportant au moins une fonction acide fort, partiellement salifiée ou totalement salifiée ou les monomères comportant au moins une fonction acide faible, partiellement salifiée ou totalement salifiée. Procédé pour leur préparation et microlatex inverses en contenant.

EP 1 113 029 A1

## Description

La présente demande de brevet concerne de nouveaux polymères, les microlatex inverses eau dans huile les contenant et leur procédé de préparation. A l'occasion de recherches sur la mise au point de nouveaux latex inverses ayant une stabilité prolongée dans le temps, la demanderesse s'est orientée vers la synthèse de polymères qui conduisent à des microémulsions eau dans huile qui, comparées aux émulsions classiques, se caractérisent par une grande stabilité thermodynamique. Elle a ainsi synthétisé des nouveaux polymères qui sont appropriés à ce type d'émulsions.

Selon un premier aspect de la présente invention, celle-ci a pour objet un polymère linéaire, branché ou réticulé, caractérisé en ce qu'il est susceptible d'être obtenu par polymérisation de N-alkyl acrylamide, avec un ou plusieurs monomères choisis parmi les monomères cationiques, les monomères comportant au moins une fonction acide fort, partiellement salifiée ou totalement salifiée, ou les monomères comportant au moins une fonction acide faible, partiellement salifiée ou totalement salifiée.

Le radical alkyle substituant l'acrylamide est linéaire ou ramifié et comporte de un à six atomes de carbone. Selon un aspect particulier de la présente invention le radical alkyle substituant l'acrylamide est ramifié et est plus particulièrement le radical isopropyle.

Par polymère branché, on désigne un polymère non linéaire qui possède des chaînes pendantes de manière à obtenir, lorsqu'il est mis en solution dans l'eau, un fort état d'enchevêtrement conduisant à des viscosités à bas gradient très importantes.

Par polymère réticulé, on désigne un polymère non linéaire. se présentant à l'état de réseau tridimensionnel insoluble dans l'eau, mais gonflable dans l'eau et conduisant donc à l'obtention d'un gel chimique.

Le polymère selon l'invention peut comporter ou bien des motifs réticulés, ou bien des motifs branchés, ou bien des motifs branchés et des motifs réticulés.

La fonction acide fort du monomère en comportant, est notamment la fonction acide sulfonique ou la fonction acide phosphonique, partiellement salifiée ou totalement salifiée. Ledit monomère est par exemple, l'acide styrènesulfonique partiellement salifié ou totalement salifié ou l'acide 2-méthyl 2-[(1-oxo 2-propènyl) amino] 1-propanesulfonique partiellement salifié ou totalement salifié.

La fonction acide faible du monomère en comportant, est notamment la fonction acide carboxylique partiellement salifiée ou totalement salifiée tel que par exemple, l'acide 3-méthyl 3-[(1-oxo 2-propènyl) amino] butanoïque, partiellement salifié ou totalement salifié.

Le monomère cationique est notamment choisi parmi les dérivés d'ammonium quaternaires. Comme exemples de monomères cationiques, il y a les sels de 2,N,N,N-tétraméthyl 2-[(1-oxo 2-propènyl) amino] propanammonium, de 2,N,N-triméthyl 2-[(1-oxo 2-propènyl) amino] propanammonium ou de N,N,N-triméthyl 3-[(1-oxo 2-propènyl) amino] propanammonium.

Par salifiée, on désigne pour les fonctions acides forts ou faibles, les sels de métaux alcalins tels, que le sel de sodium, le sel de potassium ou les sels de base azotée, tels que par exemple le sel d'ammonium ou le sel de monoéthanolamine ($HO-CH_2-CH_2-NH_3{}^+$).

L'invention a particulièrement pour objet, un polymère tel que défini précédemment, susceptible d'être obtenu par polymérisation d'un N-alkyl acrylamide, avec un ou plusieurs monomères possédant un radical 1-oxo 2-propènyle et plus particulièrement, un polymère, susceptible d'être obtenu par polymérisation du N-isopropyl acrylamide, avec un ou plusieurs monomères choisi parmi les halogénures de 2,N,N,N-tétraméthyl 2-[(1-oxo 2-propènyl) amino] propanammonium, les halogénures de 2,N,N-triméthyl 2-[(1-oxo 2-propènyl) amino] propanammonium ou les halogénures de N,N,N-triméthyl 3-[(1-oxo 2-propènyl) amino] propanammonium, l'acide 3-méthyl 3-[(1-oxo 2-propènyl) amino] butanoïque, partiellement ou totalement salifié ou l'acide 2-méthyl 2-[(1-oxo 2-propènyl) amino] 1-propane-sulfonique, partiellement ou totalement salifié.

Comme exemples de tels polymères, il y a ceux susceptibles d'être obtenus par copolymérisation du N-isopropyl acrylamide, avec l'acide 3-méthyl 3-[(1-oxo 2-propènyl) amino] butanoate de sodium ou avec l'acide 2-méthyl 2-[(1-oxo 2-propènyl) amino] 1-propanesulfonate de sodium et ceux susceptibles d'être obtenus par terpolymérisation du N-isopropyl acrylamide, avec un monomère choisi parmi l'acide 3-méthyl 3-[(1-oxo 2-propènyl) amino] butanoate de sodium ou avec l'acide 2-méthyl 2-[(1-oxo 2-propènyl) amino] 1-propanesulfonate de sodium et un monomère choisi parmi le chlorure de 2,N,N,N-tétraméthyl 2-[(1-oxo 2-propènyl) amino] propanammonium, le chlorure de 2,N,N-triméthyl 2-[(1-oxo 2-propènyl) amino] propanammonium ou le chlorure de N,N,N-triméthyl 3-[(1-oxo 2-propènyl) amino] propanammonium.

Selon un second aspect de la présente invention, celle-ci a pour objet un procédé de préparation d'un polymère tel que défini précédemment, caractérisé en ce que :

a) - l'on émulsionne une solution aqueuse contenant les monomères et les éventuels additifs tels qu'un agent de réticulation et/ou de ramification, dans une phase huile, en présence d'un ou plusieurs agents tensioactifs, de

façon à former une microémulsion,

b) - l'on amorce la réaction de polymérisation, puis on laisse se dérouler ladite réaction pour former un microlatex inverse, puis

c) - l'on isole ledit polymère.

L'agent tensioactif ou le mélange d'agents tensioactifs mis en oeuvre, a généralement un nombre de HLB supérieur ou égal à 9. La quantité utilisée est comprise entre environ 5% en poids, et environ 10% en poids de la microémulsion.

L'invention a plus particulièrement pour objet, un procédé tel que décrit précédemment, dans lequel le mélange de tensioactifs mis en oeuvre, consiste en un mélange d'au moins un agent émulsifiant du type eau dans huile avec au moins un agent émulsifiant du type huile dans eau.

Par "agent émulsifiant du type eau dans huile", on désigne des agents émulsifiants possédant une valeur de HLB suffisamment faible pour fournir des émulsions eau dans huile, tels que les esters de sorbitan, comme le monooléate de sorbitan commercialisé par la Société SEPPIC sous le nom Montane™ 80, l'isostéarate de sorbitan commercialisé par SEPPIC sous le nom Montane™ 70 ou le sesquioléate de sorbitan commercialisé par SEPPIC sous le nom de Montane™ 83.

Par "agent émulsifiant du type huile dans eau", on désigne des agents émulsifiants possédant une valeur de HLB suffisamment élevée pour fournir des émulsions huile dans l'eau tels que les esters de sorbitan éthoxylés comme l'oléate de sorbitan éthoxylé avec 20 moles d'oxyde d'éthylène, commercialisé par la société SEPPIC sous le nom de Montanox™ 80, l'alcool oléocétylique décaéthoxylé, commercialisé par la société SEPPIC sous le nom de Simulsol™ OC 710 ou les hexaoléates de sorbitan polyéthoxylés commercialisés par la société ATLAS Chemical Industries, sous les noms G-1086 et G-1096.

la phase huile de la microémulsion est constituée soit par une huile minérale commerciale contenant des hydrocarbures saturés comme les paraffines, les Isoparaffines, les cycloparaffines, présentant à température ambiante, une densité entre 0,7 et 0,9 et un point d'ébullition supérieur à 180°C, telle que par exemple l'Isopar™ M, l'Exxsol™ D 100 S, le Marcel™ 52 commercialisés par EXXON CHEMICAL, l'isohexadécane ou l'isododécane, soit par un mélange de plusieurs de ces huiles.

L'isohexadécane, qui est identifié dans Chemical Abstracts par le numéro RN = 93685-80-4, est un mélange d'isoparaffines en $C_{12}$, $C_{16}$ et $C_{20}$ contenant au moins 97 % d'isoparaffines en $C_{16}$, parmi lesquelles le constituant principal est le 2,2,4,4,6,8,8-heptaméthyl nonane (RN = 4390-04-9). Il est commercialisé en France par la société BAYER. Le Marcol™ 52 est une huile commerciale répondant à la définition des huiles de vaseline du Codex français. C'est une huile blanche minérale conforme aux réglementations FDA 21 CFR 172.878 et CFR 178.3620 (a) et elle est inscrite à la Pharmacopée des USA, US XXIII (1995) et à la Pharmacopée européenne (1993).

Le cas échéant, l'agent de réticulation et/de ramification, mis en oeuvre dans le procédé tel que défini précédemment, est un composé diéthylénique ou polyéthylénique dans la proportion molaire exprimée par rapport aux monomères mis en oeuvre, de 0,005% à 1%, et de préférence de 0,01 % à 0,2 % et, plus particulièrement de 0,01 % à 0,1 %, il s'agit par exemple du diméthacrylate d'éthylèneglycol, du diallyloxyacétate de sodium, du diacrylate d'éthylèneglycol, du diallyl urée, du triméthylol propanetriacrylate ou du méthylène bis(acrylamide).

La phase aqueuse mise en oeuvre à l'étape a) du procédé décrit ci-dessus, peut contenir jusqu'à 50% de son poids de monomère.

Le microlatex obtenu à l'issue de l'étape b), comprend entre environ 20% et 50% en poids d'eau.

Le procédé tel que décrit précédemment, peut être mis en oeuvre en discontinu en semi-continu ou en continu.

Selon un dernier aspect de la présente invention, celle-ci a pour objet un microlatex inverse susceptible d'être obtenu par la mise en oeuvre des étapes a) et b) du procédé tel que défini précédemment.

Les exemples suivants illustrent l'invention sans toutefois la limiter.

**I) Préparation des monomères**

1)-Le N-isopropvl acrylamide (NIPAM)

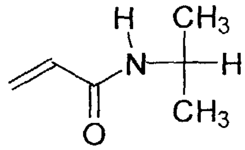

Le NIPAM est un produit commercial vendu en France par la société ACROS. Avant son utilisation, il est recristallisé deux f.ois dans un mélange toluène/cyclohexane, séché sous vide pendant 24h.

2)-Le chlorure de 3-acrylamidopropyltriméthylammonium (APTAC)

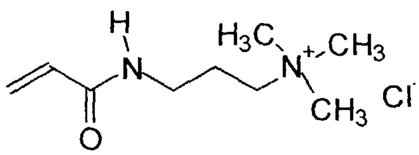

L'APTAC est un produit commercial vendu en France par la société STOCKHAUSEN, sous forme d'une solution aqueuse à 60% en poids.

3)-L'acide 2-acrvlamido-2-méthylpropylsulfonique (AMPS)

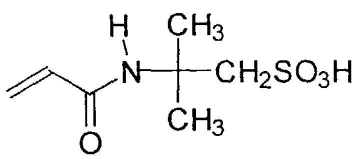

L'AMPS est un produit commercial vendu en France par la société LUBRIZOL. Il est utilisé par la suite sous forme d'une solution aqueuse à 50% en poids de son sel de sodium préparé par addition d'AMPS en poudre, dans une solution aqueuse de soude refroidie dans un bain d'eau froide puis ajustement du pH à 9.

4)-L'acide 3-méthyl 3-[(1-oxo 2-propènyl) aminol butanoïque (AMBA)

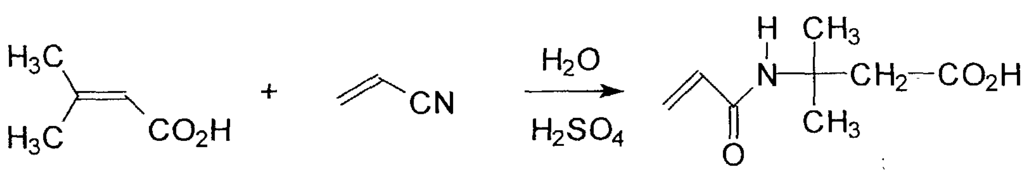


Le composé est préparé par la méthode de D.Hoke et al (J. Polym. Sci., Polym. Chem. Ed., **10**, p.3311, 1972).

15g (0,15 mole) d'acide 3,3-diméthyl acrylique préalablement recristallisé dans l'acétone sont mélangés à 7,95g (0,15 mole) d'acrylonitrile, 1,35g (0,075 mole) d'eau et une quantité catalytique de *tert*-butyl catéchol. Le mélange est refroidi à environ 5°C puis on ajoute goutte à goutte 30,38g (0,31 mole) d'acide sulfurique en maintenant la température autour de 10°C. Le mélange est laissé une nuit sous agitation à température ambiante. On refroidit ensuite le milieu à 5°C, puis on ajoute 100mL d'eau, filtre, extrait au chloroforme, sèche, filtre et évapore. On obtient après recristallisation dans le mélange méthyléthylcétone / éther de pétrole, 9,3g de cristaux du produit attendu (rendement : 36,25%)

RMN du proton ($CDCl_3$ ; δ en ppm)

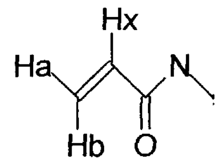

1,49 (s 6H): $CH_3$ ; 2,82 (s 2H): $CH_2$-$CO_2H$ ; 5,63 (dd 1H) : Ha ; 6,10 (dd 1H) : Hx; 6,2 (dd 1H): Hb; 6,25 (s 1H) CO-NH.

Constantes de couplage du système acryle : $J_{ab}$=1,88Hz ; $J_{ax}$=9,81Hz ; $J_{bx}$=16,94Hz.

5)-N-[1,1-diméthyl (2-diméthylamino) éthyl] acrylamide (AMPDA)

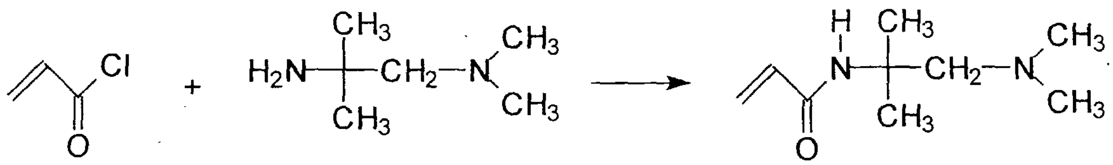

Le composé est préparé par la méthode de C. McCormick et al (Polymer, **27**, p. 1971, 1986).

18g (0,155 mole) de N,N,2-triméthyl-1,2-propanediamine, commercialisé par la société ANGUS sont mélangés à 150 $cm^3$ de tétrahydrofuranne anhydre. Le mélange est refroidi à environ 5°C puis on ajoute goutte à goutte 15,45g (0,17 mole) de chlorure d'acroyle. Le mélange est laissé une nuit sous agitation à température ambiante. On filtre, lave le précipité au tétrahydrofuranne, sèche, puis dissout dans 150 $cm^3$ d'eau, amène la solution à pH =12, extrait à la méthyléthylcétone, sèche, filtre et évapore. On obtient après recristallisation dans le mélange. méthyléthylcétone / éther de pétrole, les cristaux du produit attendu (rendement : environ 90%)

RMN du proton ($CDCl_3$ : δ en ppm)

1,40 (s 6H): $CH_3$-C ; 2,33 (s 6H): $CH_3$-N ; 2,45 (s 2H) N-$CH_2$-C ; 5,56 (dd 1H): Ha; 6,08 (dd 1H): Hx; 6,23 (dd 1H): Hb; 6,20 (s 1H) CO-NH ;
Constantes de couplage du système acryle : $J_{ab}$=2,42Hz ; $J_{ax}$=9,41 Hz ; $J_{bx}$=16,94Hz.

6)-Chlorure de 2-acrylamido-2-méthylpropanetriméthylammonium (AMPTAC)

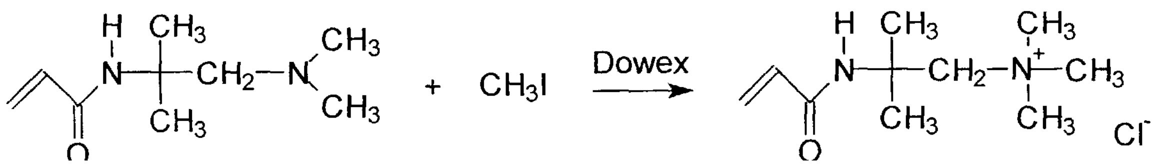


Le composé est préparé par la méthode de C. McCormick et al (Polymer, **27**, p.1971, 1986).

On dissout 4,3g (0,025 mole) d'AMPDA dans 100$cm^3$ d'éther anhydre, on ajoute 35,9g (0,253 mole) d'iodure de méthyle et on laisse sous agitation pendant 2 jours. Après filtration lavage à l'éther puis séchage sous vide, on dissout l'iodure obtenu dans 50$cm^3$ d'eau et la solution est agitée dans de la résine échangeuse d'ions (Dowex™ $Cl^-$) pendant une heure. Après filtration, lavage à l'eau et précipitation dans l'acétone, on obtient l'AMPTAC recherché.

## II)-Préparation des microémulsions

1)-L'huile

On utilise de l'Isopar™ M, commercialisé en France par la société EXXON.

2)-Les tensioactifs

L'ajout d'une quantité adéquate de tensioactifs permet de passer de l'émulsion à la microémulsion, ce qui se traduit par l'obtention d'un système parfaitement transparent. Les tensioactifs sont caractérisés par leur HLB. Le concept HLB est fondé sur des méthodes expérimentales liées à l'observation de la stabilité d'une émulsion et attribue des valeurs de 1 à 20 aux tensioactifs. Ce nombre est une mesure du pouvoir émulsifiant et traduit l'équilibre hydrophile-lipophile. Il a été montré que l'utilisation d'un mélange d'émulsifiant, l'un à haut HLB, l'autre à bas HLB, conduit à la formation d'une émulsion plus stable que celle obtenue avec un seul tensioactif de HLB équivalent. Les deux émulsifiants peuvent en effet former un complexe stable par l'intermédiaire d'associations intermoléculaires. On a essayé plusieurs tensioactifs:

| Nom commercial | HLB | Description |
|---|---|---|
| Montane™ 83 VG | 3,7 | sesquioléate de sorbitan |
| G 1086 | 10,2 | hexaoléate de sorbitan polyéthoxylé |
| G 1096 | 11,4 | hexaoléate de sorbitan polyéthoxylé |
| Montanox™ 80 | 15 | monooléate de sorbitan polyéthoxylé |
| Oramide™ ML 802 | 5,4 | oléamide de monoéthanolamine |
| Oramide™ ML 835 | 9 | oléamide de monoéthanolamine poly-éthoxylé |
| Simulsol™ OC 72 | 4,9 | alcool oléocétylique diéthoxylé |
| Simulsol™ OC 710 | 12,4 | alcool oléocétylique décaéthoxylé |

3)-Mode opératoire de la formulation

Le passage de l'émulsion à la microémulsion, est effectué par addition de tensioactifs au mélange phase aqueuse - huile. Différentes phases aqueuses ont été préparées par mélange de solutions à 50% en poids de sel de sodium de l'acide 2-acrylamido-2-méthylpropylsulfonique (AMPSNa), à 50% en poids de chlorure de 3-acrylamidopropyltriméthylammonium (APTAC), ou à 50% en poids de sel de sodium de l'acide 3-méthyl 3-[(1-oxo 2-propènyl) amino] butanoïque (AMBANa) avec une solution à 22% en poids de N-isopropyl acrylamide (NIPAM), de manière à ce que le taux de monomères contenus dans la phase aqueuse soit compris entre 44% et 35% en poids. Après addition de l'huile, un mélange de tensioactifs de HLB connue est alors ajouté sous agitation, jusqu'à ce que le système devienne transparent.
La courbe de la figure 1, représente les pourcentages pondéraux minima nécessaires en fonction de leur nombre HLB, pour différents mélanges Montane™ 83 / G1096, pour former une microémulsion d'un mélange phase aqueuse - Isopar™ M, comprenant le mélange ternaire de monomères NIPAM /AMPSNa / APTAC dans les proportions molaires relatives 20 /60 / 20.
Les courbes de la figure 2, représente les pourcentages pondéraux minima nécessaires en fonction de leur nombre HLB, pour différents mélanges Montane™ 83 / G1096, pour former une microémulsion d'un mélange, phase aqueuse -Isopar™ M, comprenant différents mélanges binaires ou ternaires de monomères. Ces mélanges sont les suivants (exprimés en proportions molaires de monomères):

| Mélanges | NIPAM | AMPSNa | AMBNa | APTAC |
|---|---|---|---|---|
| N2A8 | 20% | 80% | 0% | 0% |
| N2A6Q2 | 20% | 60% | 0% | 20% |
| N2B6Q2 | 20% | 0% | 60% | 20% |
| N5A5 | 50% | 50% | 0% | 0% |

(suite)

| Mélanges | NIPAM | AMPSNa | AMBNa | APTAC |
|---|---|---|---|---|
| N5A2,5Q2,5 | 50% | 25% | 0% | 25% |
| N5A4Q1 | 50% | 40% | 0% | 10% |

Le tableau suivant récapitule les taux pondéraux minima de tensioactifs nécessaires à l'obtention d'une microémulsion inverse de différents mélanges de monomères, pour un nombre HLB optimum.

| Mélanges de mono-mères (proportions molaires) | nombre HLB optimal pour obtenir le pourcentage pondéral minimal en tensioactifs | % pondéral en tensioactifs minimal nécessaire |
|---|---|---|
| NIPAM : 33,3% AMPSNa: 66,6% | 10,1 | 8,2 |
| NIPAM: 20% AMPSNa: 80% | 10 | 6,1 |
| NIPAM : 50% AMPSNa : 50% | 9,7 | 9 |
| NIPAM : 20% AMPSNa: 40% APTAC :40% | >11,4 | |
| NIPAM :33,3% AMPSNa :33,3% APTAC : 33,3% | 11,3 | 8,9 |
| NIPAM : 20% AMPSNa : 60% APTAC: 20% | 10,9 | 6,9 |

| Mélanges de mono-mères (proportions molaires) | nombre HLB optimal pour obtenir le pourcentage pondéral minimal en tensioactifs | % pondéral en tensioactifs minimal nécessaire |
|---|---|---|
| NIPAM: 20% AMBNa: 60% APTAC : 20% | 11 | 7 |
| NIPAM : 50% AMPSNa: 25% APTAC : 25% | 10,5 | 9,3 |
| NIPAM: 50% AMPSNa:40% APTAC: 10% | 10,2 | 9,6 |

**III)-Polymérisation**

**A)-Synthèses en discontinu**

1)-Préparation de copolymères NIPAM / AMPSNa

Les quantités sont indiquées pour 3g de copolymère de composition molaire NIPAM / AMPSNa égale à 20/80. On dissout 0,009g de 2,2'-azobis(isobutyronitrile) (AIBN) dans 6,847g d'Isopar™ M filtré. On prépare une solution aqueuse contenant les monomères en mélangeant 5,341g d'une solution d'AMPSNa à 50% en poids, 0,329g de NIPAM recristallisé deux fois et 1,177g d'eau. 6,847g de cette phase aqueuse sont ajoutés à la phase huile et l'on complète par 1,867g du mélange de tensioactifs Montane™83 / G1096, (soit 12% en poids ; nombre HLB=10,2). Le taux de monomères est de 19,27% en poids. On agite le mélange ainsi préparé, pour former plus rapidement la microémulsion (la microémulsification est en effet, un phénomène spontané). La microémulsion est ensuite irradiée par rayonnement Ultra Violet, à 20°C en atmosphère d'azote pendant 1 heure et demi. Les aspects finaux des microlatex obtenus, sont les suivants :

| Exemple | Composition (% molaires) | HLB | %TA | Aspect |
|---|---|---|---|---|
| 1 | NIPAM : 20% AMPSNa : 80% | 10 | 12 | clair |

(suite)

| Exemple | Composition (% molaires) | HLB | %TA | Aspect |
|---|---|---|---|---|
| Exemple | Composition (% molaires) | HLB | %TA | Aspect |
| 2 | NIPAM : 20% AMPSNa : 80% | 10,5 | 12 | déposé |
| 3 | NIPAM: 20% AMPSNa: 80% | 10 | 10 | clair |
| 4 | NIPAM: 50% AMPSNa : 50% | 9,8 | 12 | opaque |
| 5 | NIPAM: 20% AMPSNa : 80% | 10 | 8 | déposé |
| 6 | NIPAM: 20% AMPSNa : 80% | 10 | 14 | clair |

2)-Préparation de terpolymères NIPAM /AMPSNa / APTAC

Les quantités sont indiquées pour 3g de terpolymère de composition molaire NIPAM / AMPSNa / APTAC égale à 20 /60 /20. On dissout 0,009g d'AIBN dans 6,866g d'Isopar™ M filtré. On prépare une solution aqueuse contenant les monomères en mélangeant 5,461g d'une solution d'AMPSNa à 50% en poids, 1,642g d'une solution d'APTAC à 50% en poids, 0,449 g de NIPAM recristallisé deux fois et 1,604g d'eau. 6,847g de cette phase aqueuse sont ajoutés à la phase huile et l'on complète par 2,235g du mélange de tensioactifs Montane™83 / G1096 (soit 14% en poids ; nombre HLB = 10,9). Le taux de monomères est de 18,93% en poids. On agite le mélange ainsi préparé, pour former plus rapidement la microémulsion (la microémulsification est en effet un phénomène spontané). La microémulsion est ensuite irradiée par rayonnement ultra-violet, à 20°C en atmosphère d'azote pendant 1 heure et demi. Les aspects finaux des microlatex obtenus, sont les suivants:

| Exemples | Composition (% molaire) | HLB | %TA | Aspect |
|---|---|---|---|---|
| 7 | NIPAM: 20% ; AMPSNa : 60% APTAC : 20% | 10,9 | 14 | clair |
| 8 | NIPAM: 20% ; AMPSNa : 60% APTAC: 20% | 10,5 | 12 | déposé |
| Exemples | Composition (% molaire) | HLB | %TA | Aspect |
| 9 | NIPAM: 50% ; AMPSNa : 25% APTAC: 25% | 10,5 | 15 | déposé |
| 10 | NIPAM : 50% ; AMPSNa: 25% APTAC: 25% | 10,5 | 18 | opaque |
| 11 | NIPAM : 50% ; AMPSNa : 40% APTAC: 10% | 10,2 | 15 | déposé |
| 12 | NIPAM: 50% ; AMPSNa: 40% APTAC:10% | 10,2 | 18 | opaque |

3)-Préparation de terpolymères NIPAM / AMBNa / APTAC

La synthèse est semblable à la précédente, en remplaçant AMPSNa par AMBNa. Pour un terpolymère de composition molaire NIPAM /AMBNa /APTAC égales à 20 /60 / 20, on réalise la phase aqueuse avec 3,867g d'une solution d'AMBNa à 50% en poids, 1,379g d'une solution d'APTAC à 50% en poids, 0,377g de NIPAM et 1,347g d'eau. La masse d'Isopar™ M introduite est de 6,970g et 2,269g de tensioactifs (nombre HLB = 11, soit 14% en poids). Le taux de monomères est de 18,50% en poids. L'aspect final du microlatex obtenu, est le suivant:

| Exemple | Composition (% molaire) | HLB | %TA | Aspect |
|---|---|---|---|---|
| 13 | NIPAM : 20% ; AMBNa : 60% APTAC : 20% | 11 | 14 | clair |

4)-Isolation des polymères et purification

a)- Lorsque la polymérisation est terminée, on coule lentement le microlatex dans un excès d'isopropanol et on laisse précipiter le polymère. Après filtration, et lavage à l'isopropanol, puis à l'acétone, et séchage pendant 48h à l'étuve à vide à 40°C on isole le polymère.

b)- Pour éliminer tout résidu salin, le polymère obtenu au paragraphe a) précédent, est re-dissout dans une solution molaire de chlorure de sodium, puis la solution est versée dans des boudins à dialyse que l'on ferme hermétiquement. Lesdits boudins sont alors plongés dans l'eau distillée, on laisse la dialyse s'opérer pendant une semaine, en changeant l'eau une à deux fois par jour. Le polymère est ensuite isolé par lyophilisation.

Les polymères suivants on ainsi été précipités, lavés, dialysés et lyophilisés.

| Exemple | Composition (% molaire) | HLB | %TA |
|---|---|---|---|
| 14 | NIPAM : 20% ; AMPSNa: 60% APTAC : 20% | 10,9 | 14% |
| 15 | NIPAM : 50% ; AMPSNa: 40% APTAC : 10% | 10,2 | 18 |
| 16 | NIPAM: 20%; AMBNa: 60% APTAC : 20% | 11 | 14 |
| 17 | NIPAM: 50% ; AMPSNa : 25% APTAC : 25% | 10,5 | 18 |

5)-Analyse des polymères

a)-Détermination de la masse molaire par diffusion statique de la lumière

Les mesures de diffusion statique de lumière ont été effectuées au moyen d'un appareil AMTEC™MM1 SM200, avec comme source lumineuse, un laser de longueur d'onde 633nm et comme solvant, une solution décimolaire de chlorure de sodium. La solution mère contient 0,6 g/l de polymère. Le dépoussiérage des solutions est effectué par centrifugation à 20000 tours/min pendant 2h.

La figure 3 représente le diagramme de Zimm du terpolymère NIPAM / AMPSNa / APTAC (20 / 60 / 20).

La figure 4 représente la courbe des indices de réfraction de solutions aqueuses salines (NaCl : 0,1 molaire) du terpolymère NIPAM / AMPNa / APTAC (proportions molaires en monomères : 20 /60 / 20) mesurés avec un réfractomètre différentiel Brice Phoenix™, à la longueur d'onde de 633nm. Elle permet de déterminer les incréments d'indice de réfraction dn/dC. Dans le cas présent, dn/dC est égal à 0,153.

Du diagramme de Zimm de la figure 3, on déduit une masse molaire très élevée, de l'ordre de $13.10^6$.

**B)-Synthèses en semi-continu**

1) Avec amorceur radicalaire (AIBN +UV)

La synthèse en semi-contenu est réalisée dans le dispositif représenté à la figure 5.

On dissout l'AIBN dans l'Isopar™ M. On prépare la phase aqueuse de monomères (NIPAM / AMPSNa / APTAC 20 / 60 / 20). Lorsque les deux phases sont limpides, on ajoute 20% de la phase aqueuse à l'Isopar™ M puis le mélange de tensioactifs (8% en poids). On obtient la microémulsion par agitation du mélange. La microémulsion est versée dans le réacteur tricol à double parois et thermostaté à 20°C; elle est dégazée en faisant barboter de l'azote pendant 30 minutes. Les 80% de la phase aqueuse non utilisés sont également dégazés puis introduits dans une seringue disposée sur un pousse-seringue et raccordée au réacteur. Après irradiation par des rayons Ultra Violets, de la microémulsion pendant 5 minutes, pour amorcer la réaction de polymérisation, la solution aqueuse est injectée de façon continue pendant 50 minutes. Les résultats d'essais sont consignés dans le tableau suivant:

| Exemples | Composition (% molaire) | HLB | %TA | Aspect |
|---|---|---|---|---|
| 18 | NIPAM : 20% ; AMPSNa : 60% APTAC : 20% | 10,9 | 8% | clair |
| 19 | NIPAM: 20% ; AMPSNa: 60% APTAC: 20% | 10,9 | 6% | déposé |
| 20 | NIPAM : 50% ; AMPSNa: 25% APTAC : 25% | 10,9 | 7% | déposé |
| 21 | NIPAM: 50% ; AMPSNa: 40% APTAC: 10% | 10,2 | 10% | opaque |

b) Avec amorceur redox (couple hydroperoxyde de cumène / chlorure de thionyle)

Le mode opératoire pour le mélange de monomères NIPAM / AMPSNa / APTAC 20 / 60 /20, est le suivant:

On prépare une solution à 1% en poids d'hydroperoxyde de cumène dans l'Isopar™ M puis une solution à 2% en poids de chlorure de thionyle dans l'Isopar™ M. Les quantités d'amorceur utilisées sont de 0,015% molaire par rapport aux monomères pour l'hydroperoxyde de cumène et de 0,23% molaire pour le chlorure de thionyle. Les deux solutions sont dégazées à l'azote avant utilisation.

On prépare une microémulsion en mélangeant 6,866g de phase aqueuse de monomères, 6,866g d'Isopar™ M et 2,235g de tensioactifs puis en agitant. La microémulsion est versée dans un réacteur tricol à double parois thermostaté à 20°C, et dégazée à l'azote pendant 30 minutes. On injecte ensuite 41 mg de solution d'hydroperoxyde de cumène puis, pendant 50 minutes, 241 mg de solution de chlorure de thionyle.

**IV)-Propriétés viscosimétriques des polymères en solution**

1)-Définitions des paramètres mesurés

a) La viscosité apparente

La viscosité apparente $?_{app}$ est celle qui est donnée par la mesure expérimentale et s'exprime en Pa.s et la viscosité ? est celle extrapolée à gradient nul.

b)-La viscosité spécifique

De manière à éliminer les effets de solvant, on définit la viscosité spécifique $?_{sp}$ : $\eta_{sp} = (\eta - \eta_0)/ \eta_0$, $\eta_0$ étant la viscosité du solvant.

c)-La viscosité réduite

Pour tenir compte de la concentration en polymère (C) dans la solution on définit la viscosité réduite $?_{red}$, exprimée en $cm^3/g$ : $\eta_{red} = \eta_{sp} / C$

d-La viscosité intrinsèque

La viscosité intrinsèque exprimée en $cm^3/g$, est l'extrapolation de la viscosité réduite à concentration nulle $[?] = \lim_{c \to o} \eta_{red}$

L'équation de Huggins relie également ces paramètres, avec $k_H$ (coefficient de Huggins) qui traduit les interactions soluté / solvant.

$$\eta_{red} = [\eta] + [\eta]^2 k_H C$$

2)-Propriétés viscosimétriques du terpolymère NIPAM/AMPSNa/APTAC (20/60/20)

L'appareil utilisé est de type "couette". Il s'agit du Low Shear™ 30, de la société CONTRAVES, qui travaille à bas gradient de vitesse (entre 0,01 et 128 $s^{-1}$) et permet donc de mesurer des viscosités apparentes relativement faibles. On détermine en premier lieu, la viscosité spécifique d'un polymère NIPAM/AMPSNa/APTAC 20/60/20 en fonction de sa concentration dans une solution aqueuse décimolaire de chlorure de sodium. On réalise plusieurs solutions à partir d'une solution mère à 1% en poids de terpolymère. L'appareil est thermostaté à 25°C et on utilise le corps de mesure noté 2T-2T, permettant d'obtenir le plus de précision. Les mesures de viscosité sont faites à gradient de vitesse imposé ; l'appareil mesure la contrainte qui en résulte et calcule la viscosité apparente $\eta_{app}$, qui est égale au quotient de la contrainte, par le gradient de vitesse.

Pour une solution à 1% en poids de NIPAM / AMPSNa / APTAC 20 / 60 / 20, on constate aussi une énorme différence de viscosité spécifique à 25°C, selon qu'il s'agisse d'eau pure ($?_{sp}$ = 1785), ou d'une solution aqueuse de chlorure de sodium décinormale ($?_{sp}$ = 108).

3)-Propriétés viscosimétriques du terpolymère NIPAM /AMPSNa / AMPTAC (50/25/25)

a)-Une première série de mesures est réalisée avec l'appareil décrit au paragraphe précédent. On constate, tout d'abord, que le régime dilué se situe en dessous de $10^{-3}$g/ml A 25°C, Le coefficient de Huggins $k_H$ calculé à partir de la pente est de l'ordre de 0,45, ce qui signifie que le polymère est dans un milieu bon solvant ($0,3<k_H<0,5$). La valeur relativement élevée ($767 cm^3/g$) de la viscosité intrinsèque [η], qui traduit le rayon hydrodynamique, est due à la grande masse des polymères. A 40°C, la valeur de [η] est plus élevée ($933 cm^3/g$), donc le volume hydrodynamique mesuré est plus important.

b) Une deuxième série de mesures est réalisée avec un rhéomètre Haake Rheostress™ RS100, pour étudier le comportement d'une solution aqueuse molaire en chlorure de sodium et à 4% en poids de terpolymère NIPAM/AMPSNa / AMPTAC 50 / 25 / 25. Ce rhéomètre fonctionne selon un principe différent du précédent car il impose une contrainte et mesure le gradient de vitesse qui en résulte. Il calcule ensuite la viscosité apparente. Les mesures sont faites à 25°C à l'aide d'un plateau de 60mm et d'un cône de 60mm à 1° d'inclinaison. On alterne deux contraintes (0,2 Pa et 80 Pa) et on enregistre la viscosité apparente en fonction du temps. On note le caractère rhéofluidifiant du polymère (on passe de 5,7Pa.s à 0,2Pa.s). Lorsqu'on revient à une faible contrainte, le système met du temps à s'équilibrer (environ 2minutes).

**Revendications**

1. Polymère linéaire, branché ou réticulé, caractérisé en ce qu'il est susceptible d'être obtenu par polymérisation du N-alkyl acrylamide, dans lequel le radical alkyle est linéaire ou ramifié et comporte de 1 à 6 atomes de carbone, avec un ou plusieurs monomères choisis parmi les monomères cationiques, les monomères comportant au moins une fonction acide fort, partiellement salifiée ou totalement salifiée, ou les monomères comportant au moins une fonction acide faible, partiellement salifiée ou totalement salifiée.

2. Polymère tel que défini à la revendication 1, dans lequel le radical alkyle du N-alkyl acrylamide, est un radical ramifié.

3. Polymère tel que défini à la revendication 2, dans lequel le N-alkyl amide est le N-isopropyl acrylamide.

4. Polymère tel que défini à l'une des revendications 1 à 3, dans lequel la fonction acide fort du monomère en comportant est la fonction acide sulfonique ou la fonction acide phosphonique, partiellement salifiée ou totalement salifiée.

5. Polymère tel que défini à la revendication 4, dans lequel le monomère à fonction acide fort est l'acide styrènesulfonique, partiellement salifiée ou totalement salifié ou l'acide 2-méthyl 2-[(1-oxo 2-propènyl) amino] 1-propanesulfonique, partiellement salifié ou totalement salifié.

6. Polymère tel que défini à l'une quelconque des revendications 1 à 5, dans lequel la fonction acide faible du monomère en comportant, est la fonction acide carboxylique, partiellement salifiée ou totalement salifiée.

7. Polymère tel que défini à la revendication 6, dans lequel le monomère à fonction acide faible est l'acide 3-méthyl 3-[(1-oxo 2-propènyl) amino] butanoïque, partiellement salifiée ou totalement salifié.

8. Polymère tel que défini à l'une quelconque des revendications 1 à 7, dans lequel le monomère cationique est un dérivé ammonium quaternaire.

9. Polymère tel que défini à la revendication 8, dans lequel le monomère cationique est un sel de 2,N,N,N-tétraméthyl 2-[(1-oxo 2-propènyl) amino] propanammonium, de 2,N,N-triméthyl 2-[(1-oxo 2-propènyl) amino] propanammonium ou de N,N,N-triméthyl 3-[(1-oxo 2-propènyl) amino] propanammonium.

10. Polymère tel que défini à l'une des revendications 1 à 9, susceptible d'être obtenu par polymérisation d'un N-alkyl acrylamide, avec un ou plusieurs monomères possédant un radical 1-oxo 2-propènyle.

11. Polymère tel que défini à la revendication 10, susceptible d'être obtenu par polymérisation du N-isopropyl acrylamide, avec un ou plusieurs monomères choisi parmi les halogénures de 2,N,N,N-tétraméthyl 2-[(1-oxo 2-propènyl) amino] propanammonium, de 2,N,N-triméthyl 2-[(1-oxo 2-propènyl) amino] propanammonium ou de N,N,N-triméthyl 3-[(1-oxo 2-propènyl) amino] propanammonium, l'acide 3-méthyl 3-[(1-oxo 2-propènyl) amino] butanoïque, partiellement ou totalement salifié ou l'acide 2-méthyl 2-[(1-oxo 2-propènyl) amino] 1-propane-sulfonique partiellement ou totalement salifiée.

12. Polymère tel que défini à la revendication 11, susceptible d'être obtenu par copolymérisation du N-isopropyl acrylamide, avec l'acide 3-méthyl 3-[(1-oxo 2-propènyl) amino] butanoate de sodium ou avec l'acide 2-méthyl 2-[(1-oxo 2-propènyl) amino] 1-propanesulfonate de sodium.

**13.** Polymère tel que défini à la revendication 11, susceptible d'être obtenu par terpolymérisation du N-isopropyl acrylamide, avec un monomère choisi parmi l'acide 3-méthyl 3-[(1-oxo 2-propènyl) amino] butanoate de sodium ou l'acide 2-méthyl 2-[(1-oxo 2-propènyl) amino] 1-propanesulfonate de sodium et un monomère choisi parmi le chlorure de 2,N,N,N-tétraméthyl 2-[(1-oxo 2-propènyl) amino] propanammonium, le chlorure de 2,N,N-triméthyl 2-[(1-oxo 2-propènyl) amino] propanammonium ou le chlorure de N,N,N-triméthyl 3-[(1-oxo 2-propènyl) amino] propanammonium.

**14.** Procédé de préparation d'un polymère tel que défini à l'une des revendications1 à 13, caractérisé en ce que :

a) - l'on émulsionne une solution aqueuse contenant les monomères et les éventuels additifs, dans une phase huile, en présence d'un ou plusieurs agents tensioactifs, de façon à former une microémulsion,
b) - l'on amorce la réaction de polymérisation, puis on laisse se dérouler ladite réaction, pour former un microlatex inverse; puis
c) - l'on isole ledit polymère.

**15.** Procédé tel que défini à la revendication 14, dans lequel l'agent tensioactif ou le mélange d'agents tensioactifs mis en oeuvre, a un nombre HLB supérieur ou égal à 9.

**16.** Procédé tel que défini à la revendication 15, dans lequel le mélange de tensioactifs mis en oeuvre, consiste en un mélange d'au moins un agent émulsifiant du type eau dans huile avec au moins un agent émulsifiant du type huile dans eau.

**17.** Procédé tel que défini à l'une des revendications 14 à 16, caractérisé en ce qu'il est réalisé en discontinu, en semi-continu ou en continu.

**18.** Microlatex inverse susceptible d'être obtenu par la mise en oeuvre des étapes a) et b) du procédé, tel que défini à l'une des revendications 14 à 17.

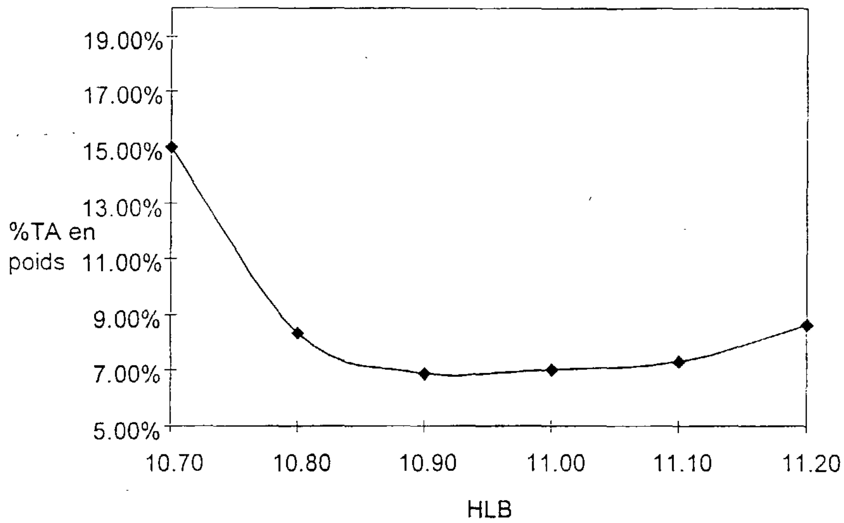


FIGURE 1

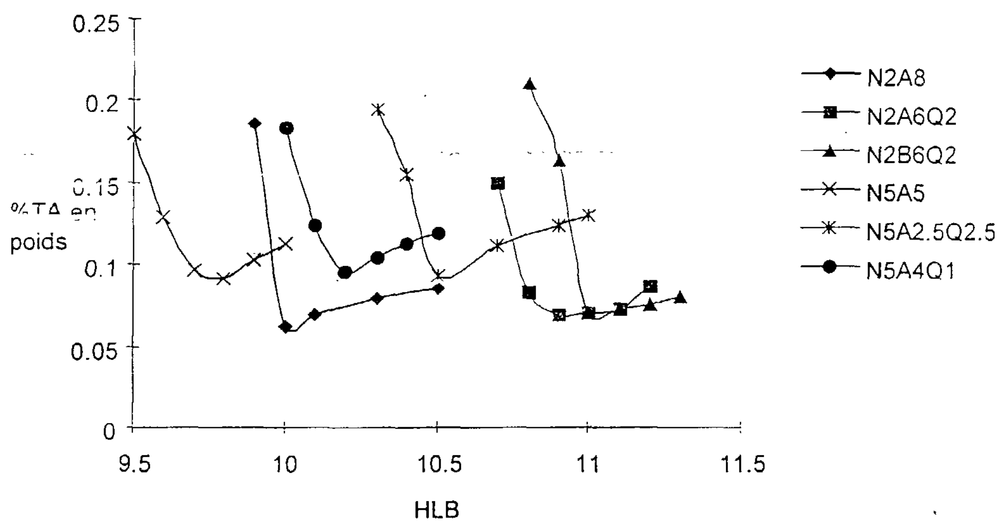


FIGURE 2

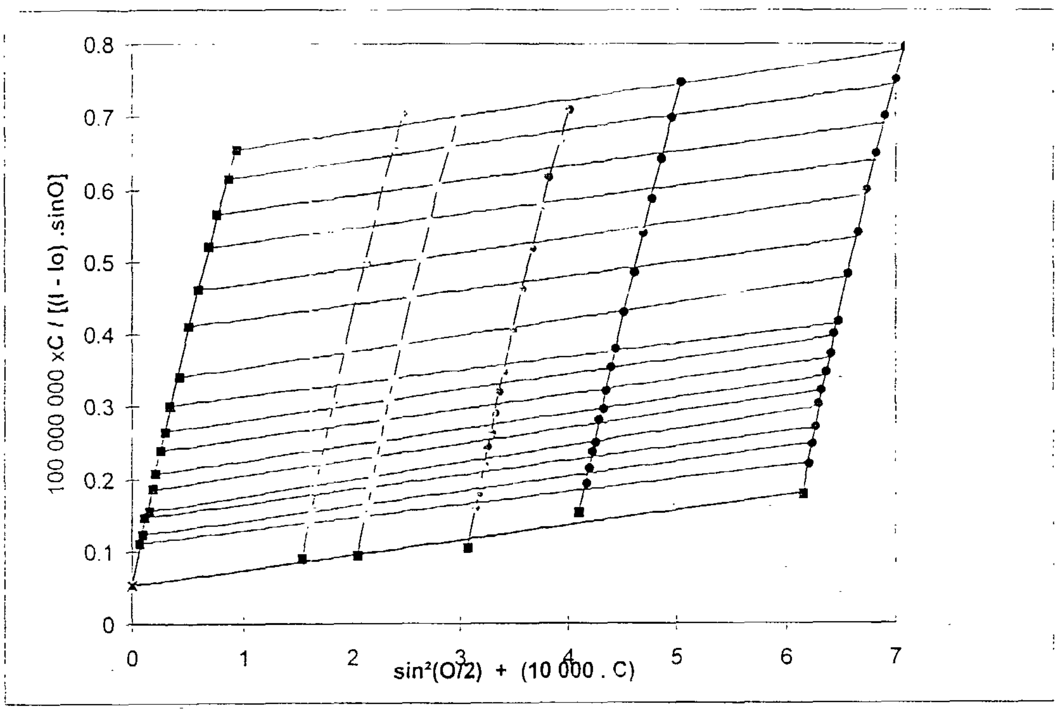


FIGURE 3

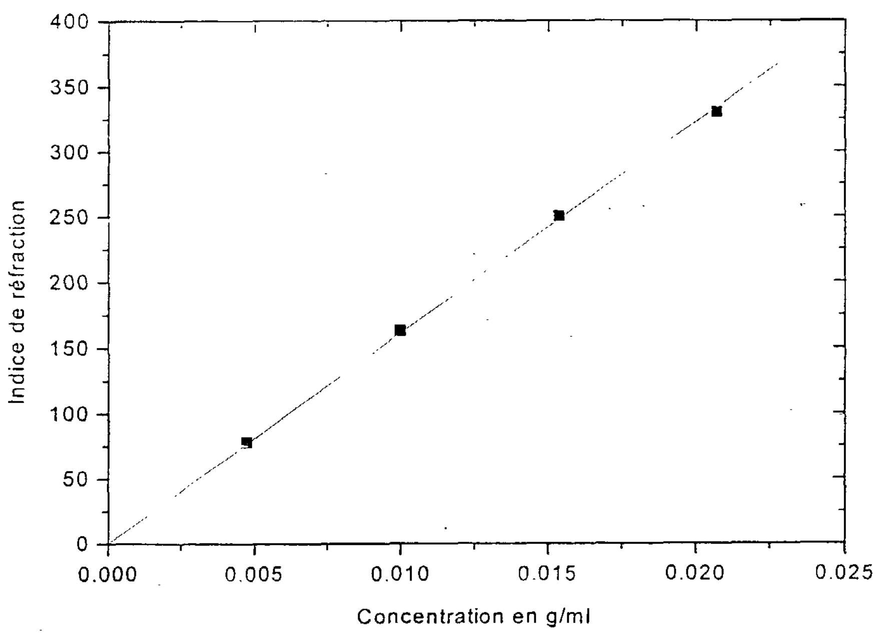


FIGURE 4

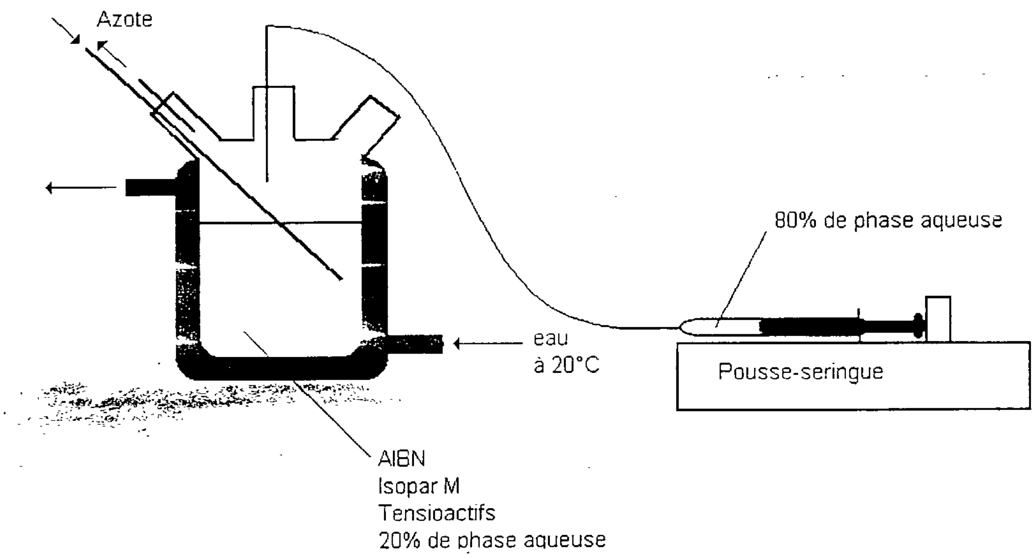
Azote
80% de phase aqueuse
eau
à 20°C
Pousse-seringue
AIBN
Isopar M
Tensioactifs
20% de phase aqueuse

FIGURE 5

Office européen des brevets

# RAPPORT DE RECHERCHE EUROPEENNE

Numéro de la demande
EP 00 40 3632

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 536 294 A (GUILLET JAMES E ET AL) 20 août 1985 (1985-08-20)<br>* exemples 7,14 *<br>* revendications * | 1-3,8,14 | C08F220/56<br>C08F220/58<br>C08F220/60<br>C08F230/02<br>C08F2/32 |
| X | EP 0 299 817 A (ATOCHEM ELF SA) 18 janvier 1989 (1989-01-18)<br>* exemples *<br>* revendications * | 1,8, 14-17 | |
| X | HAHN, MATHIAS; GÖRNITZ, ECKHARD; DAUTZENBERG, HERBERT: "sYNTHESIS AND PROPERTIES OF IONICALLY MODIFIED POLYMERS WITH LCST BEHAVIOUR"<br>MACROMOLECULES,<br>vol. 31, 1998 - 5616, page 5623<br>XP002164159<br>* page 5617 * | 1-4,6,8 | |
| X | US 5 100 953 A (VALINT PAUL L ET AL) 31 mars 1992 (1992-03-31)<br>* exemple 9 *<br>* revendications * | 1,4,5 | **DOMAINES TECHNIQUES RECHERCHES (Int.Cl.7)** |
| X | US 5 296 006 A (REED PETER E ET AL) 22 mars 1994 (1994-03-22)<br>* colonne 2, ligne 20-26 *<br>* exemple 10 *<br>* revendications * | 1,6,7 | C08F |
| A | FR 2 774 996 A (SEPPIC SA) 20 août 1999 (1999-08-20)<br>* revendications * | 1-18 | |

Le présent rapport a été établi pour toutes les revendications

| Lieu de la recherche | Date d'achèvement de la recherche | Examinateur |
|---|---|---|
| LA HAYE | 28 mars 2001 | Pollio, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen
des brevets

Numéro de la demande
EP 00 40 3632

## REVENDICATIONS DONNANT LIEU AU PAIEMENT DE TAXES

La présente demande de brevet européen comportait lors de son dépôt plus de dix revendications

☐ Une partie seulement des taxes de revendication ayant été acquittée dans les délais prescrits, le présent rapport de recherche européenne a été établi pour les dix premières revendications ainsi que pour celles pour lesquelles les taxes de revendication ont été acquittées, à savoir les revendication(s):

☐ Aucune taxe de revendication n'ayant été acquittée dans les délais prescrits, le présent rapport de recherche européenne a été établi pour les dix premières revendications.

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

voir feuille supplémentaire B

☐ Toutes les nouvelles taxes de recherche ayant été acquittées dans les délais impartis, le présent rapport de recherche européenne a été établi pour toutes les revendications.

☒ Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

☐ Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

☐ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

Office européen des brevets

**ABSENCE D'UNITÉ D'INVENTION FEUILLE SUPPLÉMENTAIRE B**

Numéro de la demande
EP 00 40 3632

La division de la recherche estime que la présente demande de brevet européen ne satisfait pas à l'exigence relative à l'unité d'invention et concerne plusieurs inventions ou pluralités d'inventions, à savoir :

1. revendications: 1-3 (part),8, 9, 10-11 (part), 13-17 (part)

   Polymère linéaire, branché ou reticulé, caractérisé en ce qu'il est susceptible d'être obtenu par polymérisation du N-alkyl acrylamide, dans lequel le radical alkyle est linéaire ou ramifié et comporte de 1 à 6 atomes de carbone, avec un ou plusieurs monomères choisis parmi les monomères cationiques; procédé de leur préparation et microlatex inverse obtenu par mise en oeuvre de cette procédé.

2. revendications: 1-3 (part) 4, 5,10-17 (part)

   Polymère linéaire, branché ou reticulé, caractérisé en ce qu'il est susceptible d'être obtenu par polymérisation du N-alkyl acrylamide, dans lequel le radical alkyle est linéaire ou ramifié et comporte de 1 à 6 atomes de carbone, avec un ou plusieurs monomères choisis parmi les monomères comportant au moins une fonction acide fort, partiallement salifiée ou totalement salifiée; procédé de leur préparation et microlatex inverse obtenu par mise en oeuvre de cette procédé.

3. revendications: 1-3 (part) 6, 7, 10-11 (part), 12, 13-17 (part)

   Polymère linéaire, branché ou reticulé, caractérisé en ce qu'il est susceptible d'être obtenu par polymérisation du N-alkyl acrylamide, dans lequel le radical alkyle est linéaire ou ramifié et comporte de 1 à 6 atomes de carbone, avec un ou plusieurs monomères choisis parmi les monomères comportant au moins une fonction acide faible, partiallement salifiée ou totalement salifiée; procédé de leur préparation et microlatex inverse obtenu par mise en oeuvre de cette procédé.

EPO FORM P0402

**ANNEXE AU RAPPORT DE RECHERCHE EUROPEENNE RELATIF A LA DEMANDE DE BREVET EUROPEEN NO.** EP 00 40 3632

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-03-2001

| Document brevet cité au rapport de recherche | Date de publication | Membre(s) de la famille de brevet(s) | Date de publication |
|---|---|---|---|
| US 4536294 A | 20-08-1985 | CA 1180827 A | 08-01-1985 |
| EP 0299817 A | 18-01-1989 | FR 2617172 A | 30-12-1988 |
| | | AT 94885 T | 15-10-1993 |
| | | BR 8807576 A | 10-04-1990 |
| | | CA 1309545 A | 27-10-1992 |
| | | DE 3884302 D | 28-10-1993 |
| | | DE 3884302 T | 28-04-1994 |
| | | ES 2058318 T | 01-11-1994 |
| | | WO 8810274 A | 29-12-1988 |
| | | JP 2503928 T | 15-11-1990 |
| | | US 5171782 A | 15-12-1992 |
| US 5100953 A | 31-03-1992 | US 5089578 A | 18-02-1992 |
| US 5296006 A | 22-03-1994 | AUCUN | |
| FR 2774996 A | 20-08-1999 | EP 1056805 A | 06-12-2000 |
| | | WO 9942521 A | 26-08-1999 |

EPO FORM P0460

Pour tout renseignement concernant cette annexe : voir Journal Officiel de l'Office européen des brevets, No.12/82